Europäisches Patentamt

European Patent Office

Office européen des brevets

(19)

(11) Veröffentlichungsnummer: **0 014 364**
A2

(12) **EUROPÄISCHE PATENTANMELDUNG**

(21) Anmeldenummer: 80100266.8

(22) Anmeldetag: 21.01.80

(51) Int. Cl.³: **C 08 F 20/44**
C 08 F 6/16
//C12N1/00, C12R1/00

(30) Priorität: 01.02.79 DE 2903852

(43) Veröffentlichungstag der Anmeldung:
20.08.80 Patentblatt 80/17

(84) Benannte Vertragsstaaten:
BE DE FR GB IT NL

(71) Anmelder: BAYER AG
Zentralbereich Patente, Marken und Lizenzen
D-5090 Leverkusen 1, Bayerwerk(DE)

(72) Erfinder: Baumgarten, Jörg, Dr.
In der Beek 88
D-5600 Wuppertal 1(DE)

(72) Erfinder: Herrig, Wolfgang, Dr.
Lindenallee 10
D-5068 Odenthal(DE)

(54) Verfahren zum mikrobiologischen Abbau von Acrylnitril in wässrigen Dispersionen.

(57) Gegenstand der vorliegenden Erfindung ist ein Verfahren zum mikrobiologischen Abbau von Acrylnitril in wäßrigen Dispersionen, wobei die Acrylnitril enthaltende, wäßrige Dispersion mit abbaufähiger biologisch aktiver Substanz bei Temperaturen zwischen ca. 10°C und 50°C für ca. 30 Minuten bis 10 Stunden in Berührung gebracht wird. Als abbaufähige biologisch aktive Substanz werden Misch und/oder Reinkulturen, deren Vitalität erhalten ist, oder stabile, konservierte Kulturpräparationen eingesetzt.

EP 0 014 364 A2

BAYER AKTIENGESELLSCHAFT     5090 Leverkusen, Bayerwerk
Zentralbereich
Patente, Marken und Lizenzen   Je/bc/Kü/kl


Verfahren zum mikrobiologischen Abbau von Acrylnitril
in wäßrigen Dispersionen
_____


Die vorliegende Erfindung betrifft ein Verfahren zum
mikrobiologischen Abbau von Acrylnitril im Latex.


Bei der Herstellung von Latices durch Emulsionspolymerisation von Acrylnitril, gegebenenfalls in Copolymerisation zusammen mit anderen Monomeren wie z.B. Butadien,
Styrol oder Acrylsäure-und/oder Methacrylsäureestern,
verbleibt im Anschluß an die Polymerisation im allgemeinen ein gewisser Rest nicht umgesetzten Acrylnitrils
im Produkt.

Es ist bekannt, diese Restmengen durch physikalische
Verfahren, wie etwa Wasserdampf- oder Vakuumdestillation
zu entfernen. Diese Verfahren sind durch einen

- 2 -

hohen Apparate- und Energieaufwand gekennzeichnet und können u.U. zu einer Beeinträchtigung anwendungstechnischer Eigenschaften führen. Es ist ferner bekannt, daß sich Belebtschlämme von Kläranlagen nach einer Gewöhnungszeit zum Abbau von Acrylnitril eignen (H. Reiffer, Chemie-Ing.-Techn. 47, 445 (1975)).

Gegenstand der vorliegenden Erfindung ist ein Verfahren zum mikrobiologischen Abbau von Acrylnitril in wäßrigen Dispersionen, insbesondere in Elastomerdispersionen, dadurch gekennzeichnet, daß wäßrige Acrylnitril enthaltende Dispersionen mit abbaufähiger biologisch aktiver Substanz in Berührung gebracht werden.

Nach dem erfindungsgemäßen Verfahren ist es überraschenderweise möglich, abbaufähige biologisch aktive Substanzen zum Abbau von Acrylnitril in komplex aufgebauten Systemen, wie Latices, einzusetzen.

Als abbaufähige biologische Substanz können sowohl Misch- und/oder Reinkulturen, deren Vitalität erhalten ist als auch stabile konservierte Kulturpräparationen, die im vorliegenden Verfahren bevorzugt eingesetzt werden, angewendet werden.

Als stabile Präparationen von Mikroorganismen werden solche eingesetzt, die aus Mischkulturen aus den Gruppen Protozoen, Algen, Blaualgen, Hefen, Pilzen und/oder Bakterien erhältlich sind. Bevorzugt werden Mischkulturen aus Pilzen und/oder Bakterien, wobei in den Mischkulturen die Abbaugeschwindigkeit der Kultur durch sukzessive Steigerung des Acrylnitrilgehaltes optimiert wird, die Mischkulturen danach durch mehrmalige Passage unter möglichst optimalen Wachstumsbedingungen in eine stabilisierte Mischkultur überführt und anschließend unter Erhalt ihrer Aktivität konserviert werden. Eine Verfahrens-

Le A 19 075

variante besteht darin, daß man aus einer nach der vorstehend beschriebenen Weise erhaltenen Mischkultur Einzelstämme auf üblichen Medien anzieht, diese nach ihrer Aktivität selektiert und die einzelnen Stämme unter sterilen Bedingungen kultiviert, wobei das abzubauende Produkt im Substrat anwesend sein kann und anschließend unter Erhaltung ihrer Aktivität konserviert.

Bei der Herstellung der nach dem erfindungsgemäßen Verfahren einzusetzenden abbaufähigen biologisch aktiven Substanz geht man von Kulturen aus, die mit Acrylnitril wachsen können. Solche Mikroorganismen findet man an Orten, die regelmäßig mit Acrylnitril in Berührung kommen, z.B. im Belebtschlamm von Kläranlagen von Acrylnitril-Herstellungsbetrieben. Diese Kulturen sind in der Regel nur an geringe Konzentrationen Acrylnitril gewöhnt und deshalb für den Abbau höherer Konzentrationen nicht geeignet. Aus diesen natürlich vorkommenden Gemischen von Mikroorganismen lassen sich neue Kulturen herstellen, die auch höhere Konzentrationen an Acrylnitril abbauen. Die Herstellung solcher Kulturen erfolgt in mehreren Passagen unter folgenden Bedingungen:

Temperaturbereich zwischen 20 und 37°C, bevorzugt zwi- schen 25 und 35°C bei einem pH-Bereich zwischen etwa 6 und 9, bevorzugt zwischen 6,8 und 7,5. Die Anzucht der Kulturen erfolgt mit Acrylnitril als Wachstumssubstrat unter Verwendung üblicher mineralischer Nährlösungen (vgl. Schlegel, Allgemeine Mikrobiologie, Verlag Georg Thieme, Stuttgart, Ausgabe I 1969, Seiten 134 - 136). Die Anzucht der Kultur erfolgt in der Weise, daß nach jeder Passage, in der Wachstum der Kultur erfolgt, stufenweise die Acrylnitrilkonzentration in der Nähr-

Le A 19 075

- 4 -

lösung erhöht wird, und sich die Kultur so an die neuen Konzentrationen gewöhnen kann. Die Anzucht wird solange wiederholt, bis man zu einer aktiven Mischkultur gelangt, die Acrylnitril in Konzentrationen über 5000 ppm verträgt. Durch diese Maßnahme wird die Kultur soweit stabilisiert, daß unsteriles Arbeiten ermöglicht wird, ohne daß eine Aktivitätsminderung eintritt. Die großtechnische Anzucht der Kultur erfolgt unter den zuvor angegebenen optimalen Bedingungen, wobei das Impfgut in das oben beschriebene Kulturmedium direkt oder in Form ihrer Konserve eingesetzt wird. Die Zugabe des Acrylnitrils als Wachstumssubstrat kann einmalig in hoher Endkonzentration (5000 ppm) oder mit einer dem Wachstum der Kultur angepaßten ständig sich erhöhenden kontinuierlichen Dosierungsrate erfolgen.

Aus den so erhaltenen Mischkulturen lassen sich auf übliche Weise durch Auslese nach ihrer spaltenden Aktivität Reinkulturen gewinnen. Die Reinkulturen können in üblichen Nährmedien kultiviert werden. Acrylnitril kann dabei im Substrat anwesend sein oder als Induktor in geringen Konzentrationen dem Substrat zugesetzt werden.

Die so erhaltenen Kulturen mit hoher Acrylnitril-Abbauaktivität werden in bekannter Weise lagerstabilisiert. Dies kann z.B. erfolgen, indem man die Kultur einfriert oder schonend trocknet, z.B. liophilisiert, sprühtrocknet oder konservierende Chemikalien, wie z.B. Zitronensäure, Benzoesäure, Ameisensäure, Salicylsäure, Zucker oder Kochsalz zugibt.

Bei der Verfahrensvariante, bei der eine Form der Lagerstabilität gewählt wird, bei der die Vitalität nicht verloren geht,

Le A 19 075

- 5 -

kann die Kultur als Impfgut für weitere, z.B. großtechnische Ansätze aufbewahrt und verwendet werden. Solche Arten der Lagerstabilisierung sind z.B. Einfrieren der Mikroorganismen und Aufbewahren bei Temperaturen unter 0°C mit und ohne Zusatz von Schutzstoffen, wie z.B. Glycerin oder Dimethylsulfoxid, Liophilisation oder Konservierung in flüssigem Stickstoff.

Zur Herstellung von Acrylnitril-abbauenden Präparationen werden die bei der Anzucht der Kultur hergestellten Mikroorganismenmassen durch Zentrifugieren gewonnen. Das dadurch auf 1/50 bis 1/100 des Ausgangsvolumens eingeengte Sediment wird eingefroren und anschließend liophilisiert. Das erhaltene Trockenprodukt ist wasserunlöslich, aber gut suspendierbar. Es erhält die gesamte Acrylnitril-abbauende Aktivität. Die so gewonnene trockene Präparation ist über Jahre ohne Aktivitätsverlust haltbar. Sie kann ohne weitere Behandlung oder auch auf fixierten Trägermaterialien zur Eliminierung von Acrylnitril in industriellen Syntheseprodukten eingesetzt werden. Bekannte Trägermaterialien sind z.B. Zellulose, Glas, Ionenaustauscher, Bimsstein, Schlacke, aktives Aluminiumoxid, Kunstharze. Daneben bieten sich als weitere Fixierungsmethoden Einbettung in Polyacrylamid oder Vernetzung mit bifunktionellen Reagentien, wie z.B. Glutaraldehyd an.

Die Präparation wird je nach Acrylnitrilkonzentration und gewünschter Abbauzeit in Konzentrationen zwischen 10 bis 2000 mg/l Acrylnitril enthaltener wäßriger Dispersion eingesetzt, z.B. indem man die Präparation als Trockenpulver zusetzt und z.B. unter langsamem Rühren oder Schütteln gleichmäßig verteilt. Die Einwirkungszeit beträgt je nach eingesetzter Menge an Präparation und Acrylnitril zwischen etwa 30 Minuten und etwa 10 Stunden. Der Abbau erfolgt bei Temperaturen zwischen etwa 10°C und 50°C, vorzugsweise

Le A 19 075

- 6 -

erfolgt er in einem Temperaturbereich von etwa 20°C bis
40°C. Weitere technische Maßnahmen, wie pH-Einstellung,
Belüftung oder Zugabe von Hilfschemikalien, sind nicht
notwendig, vorzugsweise wird jedoch bei einem pH von etwa
4 bis 10 ohne Belüftung gearbeitet. Die Präparationen
werden anschließend im Latex belassen oder im Falle immobilisierter Präparationen abgetrennt, z.B. durch
Filtration oder Dekantieren.

- 7 -

Beispiel A

Herstellung einer stabilen Acrylnitril-abbauenden Präparation

Als Ausgangskultur für die Herstellung einer Präparation
zum Abbau von Acrylnitril diente Belebtschlamm einer Kläranlage. 100 ml üblicherweise verwendete mineralische Nährlösung wurde mit 0,005 % v/v-% Acrylnitril versetzt und
mit 1 ml Belebtschlamm beimpft und bei 28°C unter Schütteln
solange inkubiert, bis Wachstum erfolgte. Der Belebtschlamm wurde dann zur Aktivitätssteigerung in mehreren
Passagen an immer höhere Acrylnitrilkonzentrationen gewöhnt. Dazu wurde die Konzentration an Acrylnitril anfangs 0,005 % v/v-% nach jeder Anzucht in Stufen verdoppelt, bis die Kultur an 0,4 % v/v-% gewöhnt war. Die so
an hohe Acrylnitril-Konzentrationen adaptierte Kultur
wurde als Impfgut für eine 10 l Fermenter-Kultur zur
Herstellung größerer Zellmengen verwendet. Dazu wurde 1
l Kultur in 9 l frische mineralische Nährlösung und 10 ml
Acrylnitril als Substrat gegeben und bei 28°C unter Belüftung und Rührung 12 Stunden weitergezüchtet. Danach
wurde weiteres Acrylnitril kontinuierlich mit einer Dosierung von 1,5 ml/h für 10 Stunden zugesetzt.

Nach 10 Stunden wurde die Fermentation durch Zentrifugieren
der Zellmassen abgebrochen. Das Sediment wurde als
lebende Konserve bei -18°C eingefroren.

Die Fermentationsdaten sind aus der nachfolgenden Tabelle zu entnehmen.

Le A 19 075

- 8 -

| Fermentations- dauer (Std.) | Acrylnitril- verbrauch (ml) | Wachstum (OD 600 nm) | [1]Einheiten pro Ltr. Fermentationsan- satz |
|---|---|---|---|
| 12 | 10 | 0,35 | 12,8 |
| 14 | 13 | 0,60 | 15,0 |
| 16 | 16 | 0,88 | 15,4 |
| 18 | 19 | 1,08 | 17,0 |
| 22 | 25 | 1,95 | 32,0 |

[1] Eine Einheit entspricht dem Umsatz von 1 /umol Acryl- nitril pro Minute.

Die aktive stabile Präparation, die zum Abbau von Acrylnitril inLatex Verwendung findet, wurde durch Zentrifugieren des Fermentationsansatzes und durch schonende Trocknung des Sediments (Lyophilisation) erhalten.

Beispiel B

Abbau von Acrylnitril unter Verwendung der Präparation, hergestellt wie unter A beschrieben

a) 3100 ml einer 35 %igen wäßrigen Dispersion eines Polymerisats hergestellt u.a. aus 45 % Butadien, 18 % Styrol und 30 % Acrylnitril wurden mit 100 mg getrockne- ter Bakterienzellen versetzt. Der Restacrylnitrilge- halt sank von ursprünglich 1600 ppm Acrylnitril bei Raumtemperatur (25°C) innerhalb 1 Stunde auf ca. 350 und innerhalb 2 Stunden auf ca. 100 ppm, jeweils bezogen auf Raumtemperatur, ab.

Le A 19 075

- 9 -

b) 2100 ml der 50 %igen wäßrigen Dispersion eines Polymerisats, hergestellt u.a. aus 64 % Butylacrylat,
10 % Styrol und 20 % Acrylnitril wurden mit 100 mg
getrockneten Bakterienzellen versetzt. Dabei wurde
der Restacrylnitrilgehalt von ursprünglich ca. 1500
ppm, bezogen auf Latex eff., bei Raumtemperatur innerhalb 1 Stunde auf weniger als 100 ppm abgebaut. Nach
2 Stunden war Acrylnitril gaschromatographisch nicht
mehr nachweisbar.

- 10 -

Patentansprüche

1. Verfahren zum mikrobiologischen Abbau von Acrylnitril in wäßrigen Dispersionen, dadurch gekennzeichnet, daß Acrylnitril enthaltende, wäßrige Dispersionen mit abbaufähiger biologisch aktiver Substanz in Berührung gebracht werden.

2. Verfahren nach Anspruch 1, dadurch gekennzeichnet, daß die Berührung bei Temperaturen zwischen ca. 10°C und ca. 50°C etwa 30 Minuten bis 10 Stunden durchgeführt wird.

3. Verfahren nach Anspruch 1 oder 2, dadurch gekennzeichnet, daß die Berührung bei pH-Werten zwischen ca. 4 bis 10 durchgeführt wird.

4. Verfahren nach einem oder mehreren der Ansprüche 1 bis 3, dadurch gekennzeichnet, daß als abbaufähige, biologisch aktive Substanz Misch- und/oder Reinkulturen, deren Vitalität erhalten ist, eingesetzt werden.

5. Verfahren nach einem oder mehreren der Ansprüche 1 bis 3, dadurch gekennzeichnet, daß als abbaufähige, biologisch aktive Substanz stabile, konservierte Kulturpräparationen eingesetzt werden.

6. Verfahren nach Anspruch 4, dadurch gekennzeichnet, daß solche stabile, konservierte Kulturpräparationen, die aus Mischkulturen der Gruppen Protozoen, Algen, Blaualgen, Hefen, Pilzen und/oder Bakterien erhältlich sind, eingesetzt werden.

Le A 19 075

- 11 -

7.  Verfahren nach einem oder mehreren der Ansprüche
    1 bis 6, dadurch gekennzeichnet, daß die abbaufähige,
    biologisch aktive Substanz anschließend im Latex
    belassen wird.

8.  Verfahren nach einem oder mehreren der Ansprüche
    1 bis 6, dadurch gekennzeichnet, daß bei immobilisierten Präparationen diese nach ausreichender Be-
    rührung abgetrennt werden.